# EUROPEAN PATENT APPLICATION

(11) **EP 4 502 058 A1**
(43) Date of publication of application: **05.02.2025**
(21) Application number: 23779515.8
(22) Date of filing: 13.03.2023
(51) Int. Cl.: C08L 65/00, C08G 61/08, C08K 3/00

(54) **RUBBER COMPOSITION AND CROSSLINKED RUBBER OBJECT**

(30) Priority: 31.03.2022 JP 2022058907
(71) Applicant: Zeon Corporation, Tokyo 100-8246 (JP)
(72) Inventor: ISOBE, Kousuke, Tokyo 100-8246 (JP); SAKURAI, Takuro, Tokyo 100-8246 (JP); HAYANO, Shigetaka, Tokyo 100-8246 (JP)
(74) Representative: Maiwald GmbH
(86) International application number: PCT/JP2023/009675
(87) International publication number: WO 2023/189495

(57) **Abstract**

A rubber composition comprising an inorganic material and a ring-opened copolymer containing a structural unit derived from cyclooctadiene and a structural unit derived from a norbornene compound is provided.

## Description

### TECHNICAL FIELD

The present invention relates to a rubber composition which can provide a cross-linked rubber having excellent fracture resistance and chipping resistance, and a cross-linked rubber.

### BACKGROUND ART

It is generally known that ring-opening metathesis polymerization of cyclopentene and a norbornene compound in the presence of a so-called Ziegler-Natta catalyst consisting of a compound with a transition metal of Group 6 of the periodic table, such as WCl₆ or MoCl₅, and an organic metal activator, such as triisobutylaluminium, diethylaluminium chloride, or tetrabutyltin affords an unsaturated linear ring-opened copolymer. A method in which the compatibility of polymers with inorganic particles is improved by introducing a functional group containing a heteroatom to polymer chain ends is also known.

For example, Patent Document 1 discloses a composition for a fracture resistant material containing an inorganic material and a ring-opened copolymer containing a structural unit derived from a monocyclic olefin and a structural unit derived from a norbornene compound. According to the technique of Patent Document 1, a cross-linked rubber having excellent fracture resistance and chipping resistance and suitably used in applications to tires and the like can be provided. However, a cross-linked rubber having more excellent fracture resistance and chipping resistance is needed.

### RELATED ART DOCUMENT

### PATENT DOCUMENT

Patent Document 1: JP 2020-15832 A

### SUMMARY OF THE INVENTION

### PROBLEM TO BE SOLVED BY THE INVENTION

The present invention has been made in view of such situations, and an object thereof is to provide a rubber composition which can provide a cross-linked rubber having excellent fracture resistance and chipping resistance, and a cross-linked rubber obtained by cross-linking such a rubber composition.

### MEANS FOR SOLVING THE PROBLEM

As a result of extensive studies to achieve the above object, the present inventors have found that a cross-linked rubber having excellent fracture resistance and chipping resistance can be obtained by using a rubber composition comprising an inorganic material and a ring-opened copolymer containing a structural unit derived from cyclooctadiene and a structural unit derived from a norbornene compound. This finding has led to the completion of the present invention.

That is, the present invention provides a rubber composition comprising an inorganic material and a ring-opened copolymer containing a structural unit derived from cyclooctadiene and a structural unit derived from a norbornene compound.

The inorganic material is preferably a carbon material or silica.

The norbornene compound is preferably a norbornene compound represented by general formula (1): 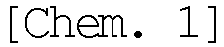 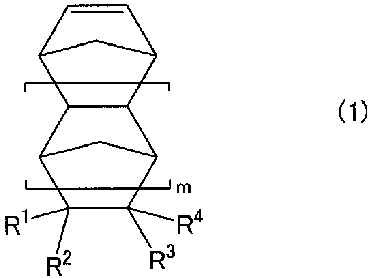 wherein R¹ to R⁴ are each a hydrogen atom, a hydrocarbon group having 1 to 20 carbon atoms, or a substituent containing a halogen atom, a silicon atom, an oxygen atom, or a nitrogen atom, and R² and R³ may be bonded to each other to form a ring structure, and "m" is 0 or 1.

R¹ to R⁴ are each preferably a hydrogen atom or a chain hydrocarbon group having 1 to 20 carbon atoms, or contain a halogen atom, a silicon atom, an oxygen atom, or a nitrogen atom.

The ring-opened polymer preferably has a weight average molecular weight of 50,000 to 1,000,000.

The ring-opened polymer preferably has a glass transition temperature of -80 to 10°C.

The rubber composition of the present invention may further comprise a rubber other than the above ring-opened copolymer.

The present invention further provides a cross-linked rubber obtained by cross-linking the above rubber composition.

### EFFECTS OF THE INVENTION

The present invention can provide a rubber composition which can provide a cross-linked rubber having excellent fracture resistance and chipping resistance, and a cross-linked rubber obtained by cross-linking such a rubber composition.

### DESCRIPTION OF EMBODIMENTS

### <Rubber composition>

The rubber composition according to the present invention comprises an inorganic material and a ring-opened copolymer containing a structural unit derived from cyclooctadiene and a structural unit derived from a norbornene compound. The rubber composition is a composition which can provide a cross-linked rubber having excellent fracture resistance, and is preferably a composition which can provide a cross-linked rubber having a tensile strength and a tear strength within suitable ranges defined by values described below.

The ring-opened copolymer contained in the rubber composition according to the present invention contains a structural unit derived from cyclooctadiene and a structural unit derived from a norbornene compound.

Examples of cyclooctadiene according to the present invention include 1,3-cyclooctadiene, 1,4-cyclooctadiene, 1,5-cyclooctadiene, and among them, 1,5-cyclooctadiene is preferred.

The norbornene compound in the present invention is a compound having a norbornene ring structure, and a norbornene compound represented by general formula (1) is preferred.

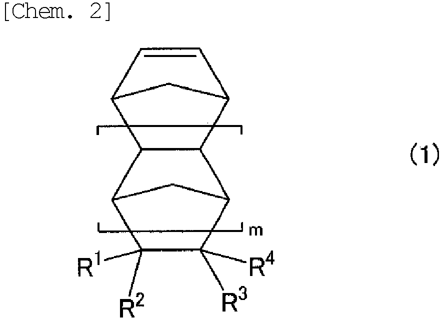

In the general formula, R¹ to R⁴ are each a hydrogen atom, a hydrocarbon group having 1 to 20 carbon atoms, or a substituent containing a halogen atom, a silicon atom, an oxygen atom, or a nitrogen atom, and R² and R³ may be bonded to each other to form a ring structure, and "m" is 0 or 1.

Specific examples of the norbornene compound represented by the above general formula (1) include the following compounds:
bicyclo[2.2.1]hept-2-enes having no substituents or having a hydrocarbon substituent, such as 2-norbornene, 5-methyl-2-norbornene, 5-ethyl-2-norbornene, 5-butyl-2-norbornene, 5-hexyl-2-norbornene, 5-decyl-2-norbornene, 5-cyclohexyl-2-norbornene, 5-cyclopentyl-2-norbornene, 5-ethylidene-2-norbornene, 5-vinyl-2-norbornene, 5-propenyl-2-norbornene, 5-cyclohexenyl-2-norbornene, 5-cyclopentenyl-2-norbornene, 5-phenyl-2-norbornene, tetracyclo[9.2.1.0^{2,10}.0^{3,8}]tetradeca-3,5,7,12-tetraene (also referred to as 1,4-methano-1,4,4a,9a-tetrahydro-9H-fluorene), tetracyclo [10.2.1.0^{2,11}.0^{4,9}]pentadeca-4,6,8,13-tetraene (also referred to as 1,4-methano-1,4,4a,9,9a,10-hexahydroanthracene), dicyclopentadiene, methyl dicyclopentadiene, and dihydrodicyclopentadiene (tricyclo[5.2.1.0^{2,6}]dec-8-ene) ;
tetracyclo[6.2.1.1^{3,6}.0^{2,7}]dodec-4-enes having no substituents or having a hydrocarbon substituent, such as tetracyclo[6.2.1.1^{3,6}.0^{2,7}]dodec-4-ene, 9-methyltetracyclo[6.2.1.1^{3,6}.0^{2,7}]dodec-4-ene, 9-ethyltetracyclo[6.2.1.1^{3,6}.0^{2,7}] dodec-4-ene, 9-cyclohexyltetracyclo[6.2.1.1^{3,6}.0^{2,7}]dodec-4-ene, 9-cyclopentyltetracyclo[6.2.1.1^{3,6}.0^{2,7}] dodec-4-ene, 9-methylenetetracyclo[6.2.1.1^{3,6}.0^{2,7}]dodec-4-ene, 9-ethylidenetetracyclo[6.2.1.1^{3,6}.0^{2,7}] dodec-4-ene, 9-vinyltetracyclo[6.2.1.1^{3,6}.0^{2,7}] dodec-4-ene, 9-propenyltetracyclo[6.2.1.1^{3,6}.0^{2,7}]dodec-4-ene, 9-cyclohexenyltetracyclo[6.2.1.1^{3,6}.0^{2,7}] dodec-4-ene, 9-cyclopentenyltetracyclo[6.2.1.1^{3,6}.0^{2,7}]dodec-4-ene, and 9-phenyltetracyclo[6.2.1.1^{3,6}.0^{2,7}]dodec-4-ene;
bicyclo[2.2.1]hept-2-enes having an alkoxycarbonyl group, such as methyl 5-norbornene-2-carboxylate, ethyl 5-norbornene-2-carboxylate, methyl 2-methyl-5-norbornene-2-carboxylate, and ethyl 2-methyl-5-norbornene-2-carboxylate;
tetracyclo [6.2.1.1^{3,6}.0^{2,7}]dodec-4-enes having an alkoxycarbonyl group, such as methyltetracyclo[6.2.1.1^{3,6}.0^{2,7}]dodec-9-ene-4-carboxylate, and methyl 4-methyltetracyclo[6.2.1.1^{3,6}.0^{2,7}]dodec-9-ene-4-carboxylate;
bicyclo[2.2.1]hept-2-enes having a hydroxycarbonyl group or an acid anhydride group, such as 5-norbornene-2-carboxylic acid, 5-norbornene-2,3-dicarboxylic acid, and 5-norbornene-2,3-dicarboxylic acid anhydride;
tetracyclo [6.2.1.1^{3,6}.0^{2,7}]dodec-4-enes having a hydroxycarbonyl group or an acid anhydride group, such as tetracyclo[6.2.1.1^{3,6}.0^{2,7}]dodec-9-ene-4-carboxylic acid, tetracyclo [6.2.1.1^{3,6}.0^{2,7}]dodec-9-ene-4, 5-dicarboxylic acid, and tetracyclo [6.2.1.1^{3,6}.0^{2,7}]dodec-9-ene-4, 5-dicarboxylic acid anhydride;
bicyclo[2.2.1]hept-2-enes having a hydroxyl group, such as 5-hydroxy-2-norbornene, 5-hydroxymethyl-2-norbornene, 5,6-di(hydroxymethyl)-2-norbornene, 5,5-di(hydroxymethyl)-2-norbornene, 5-(2-hydroxyethoxycarbonyl)-2-norbornene, and 5-methyl-5-(2-hydroxyethoxycarbonyl)-2-norbornene;
tetracyclo [6.2.1.1^{3,6}.0^{2,7}]dodec-4-enes having a hydroxyl group, such as tetracyclo[6.2.1.1^{3,6}.0^{2,7}]dodec-9-ene-4-methanol and tetracyclo[6.2.1.1^{3,6}.0^{2,7}]dodec-9-ene-4-ol;
bicyclo[2.2.1]hept-2-enes having a hydrocarbonyl group, such as 5-norbornene-2-carbaldehyde;
tetracyclo [6.2.1.1^{3,6}.0^{2,7}]dodec-4-enes having a hydrocarbonyl group, such as tetracyclo[6.2.1.1^{3,6}.0^{2,7}]dodec-9-ene-4-carbaldehyde;
bicyclo[2.2.1]hept-2-enes having an alkoxycarbonyl group and a hydroxycarbonyl group, such as 3-methoxycarbonyl-5-norbornene-2-carboxylic acid;
bicyclo[2.2.1]hept-2-enes having a carbonyloxy group, such as 5-norbornene-2-yl acetate, 2-methyl-5-norbornene-2-yl acetate, 5-norbornene-2-yl acrylate, and 5-norbornene-2-yl methacrylate;
tetracyclo [6.2.1.1^{3,6}.0^{2,7}] dodec-4-enes having a carbonyloxy group, such as 9-tetracyclo[6.2.1.1^{3,6}.0^{2,7}]dodec-4-enyl acetate, 9-tetracyclo[6.2.1.1^{3,6}.0^{2,7}]dodec-4-enyl acrylate, and 9-tetracyclo[6.2.1.1^{3,6}.0^{2,7}]dodec-4-enyl methacrylate;
bicyclo[2.2.1]hept-2-enes having a functional group containing a nitrogen atom, such as 5-norbornene-2-carbonitrile, 5-norbornene-2-carboxamide, and 5-norbornene-2,3-dicarboxylic acid imide;
tetracyclo [6.2.1.1^{3,6}.0^{2,7}]dodec-4-enes having a functional group containing a nitrogen atom, such as tetracyclo[6.2.1.1^{3,6}.0^{2,7}]dodec-9-ene-4-carbonitrile, tetracyclo [6.2.1.1^{3,6}.0^{2,7}]dodec-9-ene-4-carboxamide, and tetracyclo[6.2.1.1^{3,6}.0^{2,7}]dodec-9-ene-4,5-dicarboxylic acid imide;
bicyclo[2.2.1]hept-2-enes having a halogen atom, such as 5-chloro-2-norbornene;
tetracyclo [6.2.1.1^{3,6}.0^{2,7}]dodec-4-enes having a halogen atom, such as 9-chlorotetracyclo[6.2.1.1^{3,6}.0^{2,7}]dodec-4-ene;
bicyclo[2.2.1]hept-2-enes having a functional group containing a silicon atom, such as 5-trimethoxysilyl-2-norbornene and 5-triethoxysilyl-2-norbornene;
tetracyclo [6.2.1.1^{3,6}.0^{2,7}] dodec-4-enes having a functional group containing a silicon atom, such as 4-trimethoxysilyltetracyclo[6.2.1.1^{3,6}.0^{2,7}]dodec-9-ene and 4-triethoxysilyltetracyclo[6.2.1.1^{3,6}.0^{2,7}]dodec-9-ene.

The norbornene compound represented by the above general formula (1) is preferably a compound represented by the above general formula (1) in which "m" is 0. In the above general formula (1), R¹ to R⁴ may be the same or different.

Further, in the norbornene compound represented by the above general formula (1), R¹ to R⁴ in the above general formula (1) are each preferably a hydrogen atom, a chain hydrocarbon group having 1 to 20 carbon atoms, or a substituent containing a halogen atom, a silicon atom, an oxygen atom, or a nitrogen atom because a cross-linked rubber having more excellent fracture resistance and chipping resistance can be provided. In this case, R¹ to R⁴ may be any group which is not bonded to each other and does not form a ring, and are not particularly limited, and may be the same or different, and as R¹ to R⁴, a hydrogen atom or an alkyl group having 1 to 3 carbon atoms is preferred. Also in this case, compounds represented by the general formula in which "m" is 0 are preferred.

Specific examples of the norbornene compound in which R¹ to R⁴ in the above general formula (1) are each a hydrogen atom, a chain hydrocarbon group having 1 to 20 carbon atoms, or a substituent containing a halogen atom, a silicon atom, an oxygen atom, or a nitrogen atom include compounds below:
bicyclo[2.2.1]hept-2-enes having no substituents or having a chain hydrocarbon substituent, such as 2-norbornene, 5-methyl-2-norbornene, 5-ethyl-2-norbornene, 5-butyl-2-norbornene, 5-hexyl-2-norbornene, 5-decyl-2-norbornene, 5-ethylidene-2-norbornene, 5-vinyl-2-norbornene, and 5-propenyl-2-norbornene;
bicyclo[2.2.1]hept-2-enes having an alkoxycarbonyl group, such as methyl 5-norbornene-2-carboxylate, ethyl 5-norbornene-2-carboxylate, methyl 2-methyl-5-norbornene-2-carboxylate, and ethyl 2-methyl-5-norbornene-2-carboxylate;
bicyclo[2.2.1]hept-2-enes having a hydroxycarbonyl group, such as 5-norbornene-2-carboxylic acid and 5-norbornene-2,3-dicarboxylic acid;
bicyclo[2.2.1]hept-2-enes having a hydroxyl group, such as 5-hydroxy-2-norbornene, 5-hydroxymethyl-2-norbornene, 5,6-di(hydroxymethyl)-2-norbornene, 5,5-di(hydroxymethyl)-2-norbornene, 5-(2-hydroxyethoxycarbonyl)-2-norbornene, and 5-methyl-5-(2-hydroxyethoxycarbonyl)-2-norbornene;
bicyclo[2.2.1]hept-2-enes having a hydrocarbonyl group, such as 5-norbornene-2-carbaldehyde;
bicyclo[2.2.1]hept-2-enes having an alkoxycarbonyl group and a hydroxycarbonyl group, such as 3-methoxycarbonyl-5-norbornene-2-carboxylic acid;
bicyclo[2.2.1]hept-2-enes having a carbonyloxy group, such as 5-norbornene-2-yl acetate, 2-methyl-5-norbornene-2-yl acetate, 5-norbornene-2-yl acrylate, and 5-norbornene-2-yl methacrylate;
bicyclo[2.2.1]hept-2-enes having a functional group containing a nitrogen atom, such as 5-norbornene-2-carbonitrile and 5-norbornene-2-carboxamide;
bicyclo[2.2.1]hept-2-enes having a halogen atom, such as 5-chloro-2-norbornene;
bicyclo[2.2.1]hept-2-enes having a functional group containing a silicon atom, such as 5-trimethoxysilyl-2-norbornene and 5-triethoxysilyl-2-norbornene;

As a norbornene compound in which R¹ to R⁴ in the above general formula (1) are each a hydrogen atom, a chain hydrocarbon group having 1 to 20 carbon atoms, or a substituent containing a halogen atom, a silicon atom, an oxygen atom, or a nitrogen atom, bicyclo[2.2.1]hept-2-enes having no substituents or having a hydrocarbon substituent are preferred, and among them, 2-norbornene, 5-methyl-2-norbornene, 5-ethyl-2-norbornene, 5-ethylidene-2-norbornene, and 5-vinyl-2-norbornene are more preferred. From the viewpoint of more easily obtaining the effects according to the present invention, 2-norbornene, 5-methyl-2-norbornene, and 5-ethyl-2-norbornene are further more preferred.

Further, in the case where a compound in which R² and R³ are bonded to each other to form a ring is used as the norbornene compound represented by the above general formula (1), specific preferred examples of the ring structure include a cyclopentane ring, a cyclopentene ring, a cyclohexane ring, a cyclohexene ring, a benzene ring, and the like, and these may form a polycyclic structure, and moreover, these may have a substituent. Among these, a cyclopentane ring, a cyclopentene ring, and a benzene ring are preferred, and in particular, a compound having a cyclopentene ring alone or a compound having a polycyclic structure of a cyclopentane ring and a benzene ring is preferred. Note that R¹ and R⁴ other than R² and R³ forming a ring structure may be the same or different, and R¹ and R⁴ are each preferably a hydrogen atom or an alkyl group having 1 to 3 carbon atoms. Also in this case, compounds represented by the general formula in which "m" is 0 are preferred.

As a compound in which R² and R³ are bonded to each other to form a ring, bicyclo[2.2.1]hept-2-enes having no substituents or having a hydrocarbon substituent are preferred, and among them, dicyclopentadiene, methyldicyclopentadiene, dihydrodicyclopentadiene, 1,4-methano-1,4,4a,9a-tetrahydro-9H-fluorene, and 1,4-methano-1,4,4a,9,9a,10-hexahydroanthracene are preferred, and dicyclopentadiene, 1,4-methano-1,4,4a,9a-tetrahydro-9H-fluorene are more preferred.

The norbornene compounds in the present invention may be used alone or in combination.

In the ring-opened copolymer contained in the rubber composition according to the present invention, the content of the structural unit derived from the cyclooctadiene with respect to the total repeating structural units is preferably 10 to 75% by weight, more preferably 20 to 65% by weight, still more preferably 30 to 55% by weight, particularly preferably 35 to 50% by weight. When the content of the structural unit derived from the cyclooctadiene is within the above ranges, a cross-linked rubber having more excellent fracture resistance and chipping resistance can be provided.

In the ring-opened copolymer contained in the rubber composition according to the present invention, the content of the structural unit derived from the norbornene compound with respect to the total repeating structural units is preferably 25 to 90% by weight, more preferably 35 to 80% by weight, still more preferably 45 to 70% by weight, particularly preferably 50 to 65% by weight. When the content of the structural unit derived from the norbornene compound is within the above ranges, a cross-linked rubber having more excellent fracture resistance and chipping resistance can be provided.

The ring-opened copolymer in the present invention may be a copolymer obtained by copolymerization of the cyclooctadiene and the norbornene compound with additional monomers copolymerizable with these compounds. Examples of such additional monomers include monocyclic olefins other than cyclooctadiene, polycyclic cycloolefins having an aromatic ring, and the like. The monocyclic olefin other than cyclooctadiene may be any olefin having only one ring structure. Examples thereof include, but are not limited to, cyclic monoolefins such as cyclopropene, cyclobutene, cyclopentene, methylcyclopentene, cyclohexene, methylcyclohexene, cycloheptene, and cyclooctene; cyclic diolefins such as cyclohexadiene, methylcyclohexadiene, and methylcyclooctadiene; and the like. Examples of the polycyclic cycloolefin having an aromatic ring include phenylcyclooctene, 5-phenyl-1,5-cyclooctadiene, phenylcyclopentene, and the like. In the ring-opened copolymer in the present invention, the content of structural units derived from the additional monomers to the total repeating structural units is preferably 40% by weight or less, more preferably 30% by weight or less. As the ring-opened copolymer in the present invention, it is particularly preferable that the copolymer be substantially free from structural units derived from the additional monomers.

The weight average molecular weight (Mw) of the ring-opened copolymer in the present invention is preferably 50,000 to 1,000,000, more preferably 50,000 to 700,000, still more preferably 100,000 to 500,0000, particularly preferably 150,000 to 300,000 as measured against polystyrene standards by gel permeation chromatography. When the weight average molecular weight (Mw) is within the above ranges, a cross-linked rubber having more excellent fracture resistance and chipping resistance can be provided while good productivity and handling are maintained. When the weight average molecular weight is too low, particularly when it is 50,000 or less, the obtained cross-linked rubber becomes inferior in fracture resistance and chipping resistance. When the weight average molecular weight is too high, particularly when it is 1,000,000 or more, the obtained cross-linked rubber becomes inferior in processability, making its productivity and handling difficult. The ratio (Mw/Mn) between the weight average molecular weight (Mw) and the number average molecular weight (Mn) of the ring-opened copolymer in the present invention is preferably 1.0 to 5.0, more preferably 1.5 to 3.0 as measured against polystyrene standards by gel permeation chromatography.

The ring-opened copolymer in the present invention has a cis/trans ratio of preferably 95/5 to 5/95, more preferably 90/10 to 10/90, still more preferably 85/15 to 15/85, particularly preferably 60/40 to 20/80. The cis/trans ratio refers to the ratio of the cis double bond content to the trans double bond content (cis content/trans content) in the repeating units constituting the ring-opened copolymer in the present invention. When the cis/trans ratio is within the above ranges, the cross-linked rubber according to the present invention obtained using the ring-opened copolymer can have more excellent fracture resistance and chipping resistance. When the cis ratio is too high, the rubber composition containing a carbon material as the inorganic material may provide a cross-linked rubber having excellent wear resistance in addition to fracture resistance and chipping resistance as described below, but may be inferior in steering stability.

The ring-opened copolymer in the present invention has a glass transition temperature (Tg) of preferably -80 to 10°C, more preferably - 65 to -10°C, still more preferably -50 to -10°C. When the glass transition temperature (Tg) is within the above ranges, a cross-linked rubber obtained using the ring-opened copolymer can have more excellent fracture resistance and chipping resistance. When the glass transition point is too low, properties such as fracture resistance and chipping resistance may be lost. When the glass transition point is too high, the processability may be significantly inferior and properties such as elongation may be lost. The glass transition temperature of the ring-opened copolymer can be controlled, for example, by selecting the type and the amount of the norbornene compound used.

The ring-opened copolymer in the present invention may have a modifying group at polymer chain end(s). Owing to the presence of such a terminal modifying group, the ring-opened copolymer in the present invention may have further enhanced compatibility with the inorganic material. In this case, when the copolymer is combined with an inorganic material, the dispersibility of the inorganic material in the cross-linked rubber may be enhanced, and such enhanced dispersibility may enable production of a cross-linked rubber having further enhanced fracture resistance and chipping resistance. Although not particularly limited, the modifying group introduced to polymer chain end(s) is preferably a modifying group containing an atom selected from the group consisting of atoms of Group 15 of the periodic table, atoms of Group 16 of the periodic table, and a silicon atom.

Preferred modifying groups for forming the terminal modifying group are modifying groups containing an atom selected from the group consisting of a nitrogen atom, an oxygen atom, a phosphorus atom, a sulfur atom, and a silicon atom because such groups can enhance the compatibility with the inorganic material and such enhanced compatibility enables production of a cross-linked rubber having more enhanced fracture resistance and chipping resistance. Among these, modifying groups containing an atom selected from the group consisting of a nitrogen atom, an oxygen atom, and a silicon atom are more preferred.

Examples of modifying groups containing a nitrogen atom include amino, pyridyl, imino, amido, nitro, and urethane bond groups, and hydrocarbon groups containing any of these groups. Examples of modifying groups containing an oxygen atom include hydroxyl, carboxylic acid, ether, ester, carbonyl, aldehyde, and epoxy groups, and hydrocarbon groups containing any of these groups. Examples of modifying groups containing a silicon atom include alkylsilyl and oxysilyl groups, and hydrocarbon groups containing any of these groups. Examples of modifying groups containing a phosphorus atom include phosphoric acid and phosphino groups, and hydrocarbon groups containing any of these groups. Examples of modifying groups containing a sulfur atom include sulfonyl, thiol, and thioether groups, and hydrocarbon groups containing any of these groups. Alternatively, modifying groups containing two or more of the above groups may be used. Among these, from the viewpoint of producing a cross-linked rubber having fracture resistance and chipping resistance, particularly suitable examples of the modifying groups include amino, pyridyl, imino, amido, hydroxyl, carboxylic acid, aldehyde, epoxy, and oxysilyl groups, and hydrocarbon groups containing these groups. From the viewpoint of the compatibility with silica, oxysilyl groups are particularly preferred. The "oxysilyl group" refers to a group containing a silicon-oxygen bond.

Specific examples of the oxysilyl group include alkoxysilyl, aryloxysilyl, acyloxy, alkylsiloxysilyl, and arylsiloxysilyl groups, and the like. Other examples thereof include hydroxylsilyl groups resulting from hydrolysis of alkoxysilyl, aryloxysilyl, and acyloxy groups. Among these, aryloxysilyl groups are preferable from the viewpoint of the compatibility with the inorganic material.

The "alkoxysilyl group" refers to a group containing at least one alkoxy group linked to a silicon atom. Specific examples thereof include trimethoxysilyl, (dimethoxy) (methyl)silyl, (methoxy) (dimethyl)silyl, (methoxy) (dichloro)silyl, triethoxysilyl, (diethoxy) (methyl)silyl, (ethoxy) (dimethyl)silyl, (dimethoxy) (ethoxy)silyl, (methoxy) (diethoxy)silyl, and tripropoxysilyl groups, tris(trimethylsiloxy)silyl groups, and the like.

A degree of introduction of the modifying group to polymer chain end(s) of the ring-opened copolymer is expressed as a percentage of the number of ring-opened copolymer chain ends to which the modifying group is introduced with respect to the total number of ring-opened copolymer chain ends, and is preferably 10% or more, more preferably 20% or more, still more preferably 30% or more, particularly preferably 40% or more, although not particularly limited thereto. A higher degree of introduction of the terminal modifying group is preferable because such a value indicates higher compatibility with the inorganic material, which thereby leads to reduced heat buildup. The degree of introduction of the modifying group to polymer chain end(s) can be measured by any method. For example, in the case where an oxysilyl group is introduced as the terminal modifying group, the degree can be determined from the peak area ratio corresponding to an oxysilyl group determined by ¹H-NMR and the number average molecular weight determined by gel permeation chromatography.

The Mooney viscosity (ML1+4, 100°C) of the ring-opened copolymer in the present invention is preferably in the range from 20 to 150, more preferably from 22 to 120, still more preferably from 25 to 90. When the Mooney viscosity is within the above ranges, easy kneading at normal temperature and high temperatures becomes possible, thereby leading to good processability.

The ring-opened copolymer in the present invention can be produced by any method. Examples of such methods include, but are not limited to, copolymerization of the cyclooctadiene and the norbornene compound in the presence of a ring-opening polymerization catalyst.

The ring-opening polymerization catalyst may be any catalyst that can catalyze ring-opening copolymerization of the cyclooctadiene and the norbornene compound. Among others, preferred is a ruthenium-carbene complex or a so-called Ziegler-Natta catalyst.

Specific examples of the ruthenium-carbene complex include bis(tricyclohexylphosphine)benzylidene ruthenium dichloride, bis(triphenylphosphine)-3,3-diphenylpropenylidene ruthenium dichloride, bis(tricyclohexylphosphine)t-butylvinylidene ruthenium dichloride, dichloro-(3-phenyl-1H-inden-1-ylidene)bis(tricyclohexylphosphine) ruthenium, bis(1,3-diisopropylimidazolin-2-ylidene)benzylidene ruthenium dichloride, bis(1,3-dicyclohexylimidazolin-2-ylidene)benzylidene ruthenium dichloride, (1,3-dimesitylimidazolin-2-ylidene) (tricyclohexylphosphine)benzylidene ruthenium dichloride, (1,3-dimesitylimidazolidin-2-ylidene) (tricyclohexylphosphine)benzylidene ruthenium dichloride, bis(tricyclohexylphosphine)ethoxymethylidene ruthenium dichloride, (1,3-dimesitylimidazolidin-2-ylidene) (tricyclohexylphosphine)ethoxymethylidene ruthenium dichloride, and the like.

A Ziegler-Natta catalyst is a mixed catalyst of a compound with a transition metal of Group 6 of the periodic table and an organoaluminium compound. Specific examples of compounds with a transition metal of Group 6 of the periodic table include molybdenum compounds such as molybdenum pentachloride, molybdenum oxotetrachloride, molybdenum(phenylimide)tetrachloride, tridodecylammonium molybdate, methyltrioctylammonium molybdate, tridecylammonium molybdate, trioctylammonium molybdate, and tetraphenylammonium molybdate; tungsten compounds such as tungsten hexachloride, tungsten oxotetrachloride, tungsten(phenylimide)tetrachloride, monocatecholate tungsten tetrachloride, bis(3,5-ditertiary butyl) catecholate tungsten dichloride, bis(2-chloroetherate)tetrachloride, and tungsten oxotetraphenolate; and the like.

Specific examples of organoaluminium compounds contained in a Ziegler-Natta catalyst include diethylaluminium ethoxide, diethylaluminium isopropoxide, diisobutylaluminium butoxide, diisobutylaluminium hexoxide, diethylaluminium(2-trichloroethoxide), diethylaluminium(2-tribromoethoxide), diethylaluminium(1,3-dichloro-2-propoxide), diethylaluminium(1,1,1,3,3,3-hexafluoro-2-propoxide), diethylaluminium(1,1,1-trichloro-2-methyl-2-propoxide), diethylaluminium(2,6-diisopropylphenoxide), ethylaluminium di(2-trichloroethoxide), ethylaluminium di(2-tribromoethoxide), ethylaluminium di(1,3-dichloro-2-propoxide), ethylaluminium di(1,1,1,3,3,3-hexafluoro-2-propoxide), ethylaluminium di(1,1,1-trichloro-2-methyl-2-propoxide), ethylaluminium bis(2,6-diisopropylphenoxide), ethyl(chloro)aluminium ethoxide, ethyl (chloro) aluminium isopropoxide, ethyl (chloro) aluminium butoxide, ethyl (chloro) aluminium(2-trichloroethoxide), ethyl(chloro)aluminium(2-tribromoethoxide), ethyl(bromo)aluminium(1,3-dichloro-2-propoxide), ethyl(chloro)aluminium(1,1,1,3,3,3-hexafluoro-2-propoxide), ethyl(chloro)aluminium(1,1,1-trichloro-2-methyl-2-propoxide), ethyl (chloro)aluminium(2,6-diisopropylphenoxide), and the like.

These ring-opening polymerization catalysts may be used alone or in combination as a mixture.

The amount of the ring-opening polymerization catalyst to be used is expressed as a molar ratio (ring-opening polymerization catalyst:monomers used in copolymerization), and is in the range of typically 1:500 to 1:2,000,000, preferably 1:700 to 1:1,500,000, more preferably 1:1,000 to 1:1,000,000.

The polymerization reaction may be performed in the absence of a solvent or in a solution. In the case of copolymerization in a solution, the solvent used may be any solvent which is inert during the polymerization reaction and can dissolve compounds used in the copolymerization including the cyclooctadiene, the norbornene compound, and the polymerization catalyst. Preferred are hydrocarbon-based solvents and halogen-containing solvents. Specific examples of the hydrocarbon-based solvent include aromatic hydrocarbons such as benzene, toluene, xylene, and ethylbenzene; aliphatic hydrocarbons such as hexane, n-heptane, and n-octane; alicyclic hydrocarbons such as cyclohexane, cyclopentane, and methylcyclohexane; and the like. Specific examples of the halogen-containing solvent include haloalkanes such as dichloromethane and chloroform; aromatic halogens such as chlorobenzene and dichlorobenzene; and the like. These solvents may be used alone or in combination.

In the process of ring-opening polymerization of the cyclooctadiene and the norbornene compound, in order to adjust the molecular weight of the resulting ring-opened copolymer, an olefin compound or a diolefin compound may be optionally added as a molecular weight modifier to the polymerization reaction system.

The olefin compound may be any organic compound having an ethylenically unsaturated bond. Examples thereof include, but are not limited to, α-olefins such as 1-butene, 1-pentene, 1-hexene, and 1-octene; styrene compounds such as styrene and vinyltoluene; halogen-containing vinyl compounds such as acryl chloride; vinyl ethers such as ethylvinyl ether and i-butylvinyl ether; amine-containing vinyl compounds such as allylamine, N,N-dimethylallylamine, and N,N-diethylallylamine; disubstituted olefins such as 2-butene and 3-hexene; and the like.

Examples of the diolefin compound include non-conjugated diolefins such as 1,4-pentadiene, 1,4-hexadiene, 1,5-hexadiene, 1,6-heptadiene, 2-methyl-1,4-pentadiene, and 2,5-dimethyl-1,5-hexadiene.

The amount of the olefin compound or the diolefin compound used as the molecular weight modifier can be appropriately selected according to the molecular weight of the resulting ring-opened copolymer, and the amount thereof expressed as a molar ratio to the monomers used in copolymerization is typically 1/100 to 1/100,000, preferably 1/200 to 1/50,000, more preferably 1/500 to 1/10,000.

In the case where the ring-opened copolymer in the present invention is prepared as a copolymer having the modifying group at polymer chain end(s), a modifying group-containing olefinically unsaturated hydrocarbon compound is preferably used as a molecular weight modifier instead of the olefin compound and the diolefin compound described above. In the presence of such a modifying group-containing olefinically unsaturated hydrocarbon compound, the copolymerization can result in a ring-opened copolymer in which the modifying group is suitably introduced to polymer chain ends.

The modifying group-containing olefinically unsaturated hydrocarbon compound may be any compound having the modifying group and one metathesis polymerizable olefinic carbon-carbon double bond, although not particularly limited thereto. For example, in order to introduce oxysilyl groups to polymer chain ends of the ring-opened copolymer, an oxysilyl group-containing olefinically unsaturated hydrocarbon is added to the polymerization reaction system.

As examples of such oxysilyl group-containing olefinically unsaturated hydrocarbons, the following compounds can be mentioned. Hydrocarbons for introducing the modifying group to only one end (single end) of the polymer chains of the ring-opened copolymer include alkoxysilane compounds such as vinyl(trimethoxy)silane, vinyl(triethoxy)silane, allyl(trimethoxy)silane, allyl (methoxy) (dimethyl)silane, allyl(triethoxy)silane, allyl(ethoxy) (dimethyl)silane, styryl(trimethoxy)silane, styryl(triethoxy)silane, styrylethyl(triethoxy)silane, allyl (triethoxysilylmethyl) ether, and allyl(triethoxysilylmethyl) (ethyl)amine; aryloxysilane compounds such as vinyl (triphenoxy) silane, allyl(triphenoxy)silane, and allyl (phenoxy) (dimethyl) silane; acyloxysilane compounds such as vinyl(triacetoxy)silane, allyl(triacetoxy)silane, allyl(diacetoxy)methylsilane, and allyl(acetoxy) (dimethyl)silane; alkylsiloxysilane compounds such as allyltris(trimethylsiloxy)silane; arylsiloxysilane compounds such as allyltris(triphenylsiloxy)silane; polysiloxane compounds such as 1-allylheptamethyltrisiloxane, 1-allylnonamethyltetrasiloxane, 1-allylnonamethylcyclopentasiloxane, and 1-allylundecamethylcyclohexasiloxane; and the like.

Hydrocarbons for introducing the modifying group to both polymer chain ends (both ends) of the ring-opened copolymer include alkoxysilane compounds such as bis(trimethoxysilyl)ethylene, bis(triethoxysilyl)ethylene, 2-butene-1,4-di(trimethoxysilane), 2-butene-1,4-di(triethoxysilane), and 1,4-di(trimethoxysilylmethoxy)-2-butene; aryloxysilane compounds such as 2-butene-1,4-di(triphenoxysilane); acyloxysilane compounds such as 2-butene-1,4-di(triacetoxysilane); alkylsiloxysilane compounds such as 2-butene-1,4-di[tris(trimethylsiloxy)silane]; arylsiloxysilane compounds such as 2-butene-1,4-di[tris(triphenylsiloxy)silane]; polysiloxane compounds such as 2-butene-1,4-di(heptamethyltrisiloxane) and 2-butene-1,4-di(undecamethylcyclohexasiloxane); and the like.

The modifying group-containing olefinically unsaturated hydrocarbon compounds such as oxysilyl group-containing olefinically unsaturated hydrocarbons not only act to introduce the modifying group to polymer chain ends of the ring-opened copolymer, but also act as molecular weight modifiers. Due to this nature, the amount of the modifying group-containing olefinically unsaturated hydrocarbon compound to be used can be appropriately selected according to the molecular weight of the resulting ring-opened copolymer, and the amount thereof expressed as a molar ratio to the monomers used in copolymerization is in the range of typically 1/100 to 1/100,000, preferably 1/200 to 1/50,000, more preferably 1/500 to 1/10,000.

The polymerization temperature is preferably -100°C or higher, more preferably -50°C or higher, still more preferably 0°C or higher, particularly preferably 20°C or higher, although not particularly limited thereto. The upper limit of the polymerization temperature is preferably lower than 120°C, more preferably lower than 100°C, still more preferably lower than 90°C, particularly preferably 80°C or lower, although not particularly limited thereto. Although the polymerization reaction time is also not particularly limited, it is preferably 1 minute to 72 hours, more preferably 10 minutes to 20 hours.

To the ring-opened copolymer obtained by the polymerization reaction may be optionally added an antioxidant such as a phenol-based stabilizer, a phosphorus-based stabilizer, or a sulfur-based stabilizer. The amount of the antioxidant to be added can be determined according to factors such as the type thereof. Additionally, an extender oil may also be added if needed. In the case where the ring-opened copolymer is prepared as a polymer solution, any known recovery method can be used to recover the ring-opened copolymer from the polymer solution. Examples of such methods include a method involving removing the solvent by steam stripping or the like, filtering out the solid, and drying the solid to afford the ring-opened copolymer as a solid; a method involving directly devolatilizing the solvent and the like by a twin-screw heating dryer or the like to afford the ring-opened copolymer as a solid; a method involving removing the solvent by reprecipitation with a poor solvent, filtering out the solid, and drying the solid to afford the ring-opened copolymer as a solid; and the like.

The rubber composition according to the present invention may further contain a rubber other than the above-described ring-opened copolymer as a rubber component. Note that the rubber component in the present invention refers to the above-described ring-opened copolymer and a rubber other than the above-described ring-opened copolymer. Examples of such rubbers other than the above-described ring-opened copolymer include natural rubber (NR), polyisoprene rubber (IR), emulsion polymerized SBR (styrene-butadiene copolymer rubber), solution-polymerized random SBR (bound styrene: 5 to 50% by weight, 1,2-bond content in butadiene units: 10 to 80%), high trans SBR (trans bond content in butadiene units: 70 to 95%), low cis BR (polybutadiene rubber), high cis BR, high trans BR (trans bond content in butadiene units: 70 to 95%), ethylene-propylene-diene rubber (EPDM), styreneisoprene copolymer rubber, butadiene-isoprene copolymer rubber, emulsion polymerized styrene-acrylonitrile-butadiene copolymer rubber, acrylonitrile-butadiene copolymer rubber, high vinyl SBR-low vinyl SBR block copolymer rubber, polyisoprene-SBR block copolymer rubber, polystyrene-polybutadiene-polystyrene block copolymer, acrylic rubber, epichlorohydrin rubber, fluororubber, silicon rubber, ethylene-propylene rubber, urethane rubber, and the like. Among these, NR, BR, IR, EPDM, and SBR are preferably used, and solution-polymerized random SBR is particularly preferably used. These rubbers can be used alone or in combination.

The rubber other than the above-described ring-opened copolymer in the present invention may have a modifying group at polymer end(s). Examples of the modifying group at polymer end(s) of the rubber other than the above-described ring-opened copolymer include the same modifying groups as the modifying groups at polymer ends of the above-mentioned ring-opened copolymer, and modifying groups that are the same as the suitable modifying groups at polymer ends of the above-mentioned ring-opened copolymer are suitable.

The rubber composition according to the present invention comprises an inorganic material serving as a filler. The inorganic material contained in the rubber composition according to the present invention is preferably a carbon material or silica. The carbon material is preferably carbon black. The rubber composition containing the carbon material as the inorganic material can provide a cross-linked rubber having not only excellent fracture resistance and chipping resistance, but also excellent wear resistance and steering stability. Further, the rubber composition containing silica as the inorganic material can provide a cross-linked rubber having not only excellent fracture resistance and chipping resistance, but also excellent wet grip properties and reduced heat buildup.

Examples of the carbon black used as the inorganic material contained in the rubber composition according to the present invention include furnace black, acetylene black, thermal black, channel black, and graphite. Among these, furnace black is preferable, and specific examples thereof include SAF, ISAF, ISAF-HS, ISAF-LS, IISAF-HS, HAF, HAF-HS, HAF-LS, FEF, and the like. These carbon blacks may be used alone or in combination.

The nitrogen adsorption specific surface area (N₂SA) of the carbon black is preferably from 5 to 200 m²/g, more preferably from 70 to 120 m²/g, and the dibutyl phthalate (DBP) adsorption amount is preferably from 5 to 300 ml/100 g, more preferably from 80 to 160 ml/100 g.

Examples of silica used as the inorganic material contained in the rubber composition according to the present invention include dry process white carbon, wet process white carbon, colloidal silica, precipitated silica disclosed in JP 62-62838 A, and the like. Preferred among these is wet process white carbon mainly composed of hydrous silicic acid. Further, a carbon-silica dual phase filler comprising carbon black and silica supported on the surface thereof may be used. These silicas may be used alone or in combination.

The nitrogen adsorption specific surface area of the silica (measured by the BET method in accordance with ASTM D3037-81) is preferably 50 to 400 m²/g, more preferably 100 to 220 m²/g. The pH of the silica is preferably less than 7, more preferably 5 to 6.9. Silica having a pH within these ranges has a particularly preferable level of compatibility with the ring-opened copolymer.

When silica is used as the inorganic material, a silane coupling agent is preferably further mixed in the rubber composition according to the present invention in order to further enhance the compatibility between the ring-opened copolymer and the silica. Examples of the silane coupling agent include vinyltriethoxysilane, β-(3,4-epoxycyclohexyl)ethyltrimethoxysilane, N-(β-aminoethyl)-γ-aminopropyltrimethoxysilane, bis(3-(triethoxysilyl)propyl)tetrasulfide, and bis(3-(triethoxysilyl)propyl)disulfide; and tetrasulfides described in JP 6-248116 A, such as γ-trimethoxysilylpropyldimethylthiocarbamyl tetrasulfide and γ-trimethoxysilylpropylbenzothiazyl tetrasulfide. Among these, the tetrasulfides are preferable. These silane coupling agents may be used alone or in combination. The amount of the silane coupling agent to be added is preferably 0.1 to 30 parts by weight, more preferably 1 to 15 parts by weight with respect to 100 parts by weight of the inorganic material.

The amount of the inorganic material in the present invention is preferably 10 to 150 parts by weight, more preferably 20 to 120 parts by weight, still more preferably 40 to 100 parts by weight, particularly preferably 40 to 60 parts with respect to 100 parts by weight of the rubber component.

In the rubber composition according to the present invention, in addition to the above-mentioned components, necessary amounts of compounding agents such as a cross-linking agent, a cross-linking accelerator, a cross-linking activator, a filler other than the inorganic material, an antioxidant, an activator, a process oil, a plasticizer, and a lubricant may be added in a conventional manner.

Examples of the cross-linking agent include sulfurs such as powdered sulfur, precipitated sulfur, colloidal sulfur, insoluble sulfur, and highly dispersible sulfur; halogenated sulfurs such as sulfur monochloride and sulfur dichloride; organic peroxides such as dicumyl peroxide and ditertiary butyl peroxide; quinone dioximes such as p-quinone dioxime and p,p'-dibenzoylquinone dioxime; organic polyvalent amine compounds such as triethylenetetramine, hexamethylenediamine carbamate, and 4,4'-methylene bis-o-chloroaniline; alkylphenol resins having a methylol group; and the like. Among these, sulfurs are preferred, and powdered sulfur is more preferred. These cross-linking agents are used alone or in combination. The amount of the cross-linking agent to be added is preferably 0.1 to 15 parts by weight, more preferably 0.5 to 5 parts by weight with respect to 100 parts by weight of rubber components in the rubber composition.

Examples of the cross-linking accelerator include sulfenamide-based cross-linking accelerators such as N-cyclohexyl-2-benzothiazolylsulfenamide, N-(tert-butyl)-2-benzothiazolylsulfenamide, N-oxyethylene-2-benzothiazolylsulfenamide, N-oxyethylene-2-benzothiazolylsulfenamide, and N,N'-diisopropyl-2-benzothiazolylsulfenamide; guanidine-based cross-linking accelerators such as 1,3-diphenylguanidine, 1,3-di-ortho-tolylguanidine, and 1-ortho-tolylbiguanidine; thiourea-based cross-linking accelerators such as diethylthiourea; thiazole-based cross-linking accelerators such as 2-mercaptobenzothiazole, dibenzothiazyl disulfide, and zinc 2-mercaptobenzothiazole; thiuram-based cross-linking accelerators such tetramethylthiuram monosulfide and tetramethylthiuram disulfide; dithiocarbamic acid-based cross-linking accelerators such as sodium dimethyldithiocarbamate and zinc diethyldithiocarbamate; xanthogenic acid-based cross-linking accelerators such as sodium isopropyl xanthate, zinc isopropyl xanthate, and zinc butyl xanthate; and the like. Among these, those containing sulfenamide-based cross-linking accelerators are preferable, and those containing N-(tert-butyl)-2-benzothiazolylsulfenamide are particularly preferable. These cross-linking accelerators are used alone or in combination. The amount of the cross-linking accelerator to be added is preferably 0.1 to 15 parts by weight, more preferably 0.5 to 5 parts by weight with respect to 100 parts by weight of the rubber components in the rubber composition.

As the cross-linking activator, a higher fatty acid such as stearic acid, zinc oxide, or the like can be used. The amount of the cross-linking activator to be added can be appropriately selected. In the case of a higher fatty acid, the amount thereof to be added is preferably 0.05 to 15 parts by weight, more preferably 0.5 to 5 parts by weight with respect to 100 parts by weight of the rubber components in the rubber composition. In the case of zinc oxide, the amount thereof to be added is preferably 0.05 to 10 parts by weight, more preferably 0.5 to 3 parts by weight with respect to 100 parts by weight of the rubber components in the rubber composition.

As the process oil, a mineral oil or a synthetic oil may be used. As the mineral oil, an aroma oil, a naphthenic oil, a paraffin oil, or the like is typically used. Examples of other compounding agents include activators such as diethylene glycol, polyethylene glycol, and silicone oil; fillers other than the inorganic material such as calcium carbonate, talc, and clay; tackifiers such as petroleum resin and coumarone resin; waxes; and the like.

The rubber composition according to the present invention can be obtained by kneading the components by an ordinary method. For example, the rubber composition can be obtained by kneading compounding agents other than the cross-linking agent and the cross-linking accelerator with the rubber component such as the ring-opened copolymer, and then combining the kneaded product with the cross-linking agent and the cross-linking accelerator. The kneading temperature of the compounding agents other than the cross-linking agent and the cross-linking accelerator with the rubber components including the ring-opened copolymer is preferably 20 to 200°C, more preferably 30 to 180°C, and the kneading time is preferably 30 seconds to 30 minutes. The cross-linking agent and the cross-linking accelerator are mixed at typically 100°C or lower, preferably at 80°C or lower.

### <Cross-linked rubber>

The cross-linked rubber according to the present invention is obtained by cross-linking the above-described rubber composition according to the present invention.

The cross-linked rubber according to the present invention can be produced using the rubber composition according to the present invention, for example, by molding with a molding machine enabling molding into a desired shape, such as an extruding machine, an injection molding machine, a compressor, or a roll, performing a cross-linking reaction by heating, and fixing the shape as a cross-linked rubber. In this case, the cross-linking may be performed after the molding is performed beforehand or simultaneously with the molding. The molding temperature is typically 10 to 200°C, preferably 25 to 120°C. The cross-linking temperature is typically 100 to 200°C, preferably 130 to 190°C; the cross-linking time is typically 1 minute to 24 hours, preferably 2 minutes to 12 hours, particularly preferably 3 minutes to 6 hours.

Depending on the shape, the size, and the like thereof, the inside of the cross-linked rubber may not be sufficiently cross-linked even when the surface thereof is cross-linked. To avoid this, the cross-linked rubber may be further heated for secondary cross-linking.

As a heating method, a common method used to cross-link rubber such as press heating, steam heating, oven heating, or hot air heating can be appropriately selected.

The cross-linked rubber according to the present invention thus obtained has a high tensile strength and a high tear strength. Specifically, the cross-linked rubber according to the present invention has a tensile strength of preferably 20 MPa or higher, more preferably 25 MPa or higher, still more preferably 30 MPa or higher, particularly preferably 35 MPa or higher, as measured in a tensile test in accordance with JIS K6251:2010. The cross-linked rubber according to the present invention has an elongation of preferably 250% or higher, more preferably 300% or higher, still more preferably 350% or higher, particularly preferably 400% or higher, as measured in a tensile test in accordance with JIS K6251:2010. The cross-linked rubber according to the present invention has a tear strength of preferably 70 N/mm or higher, more preferably 75 N/mm or higher, still more preferably 80 N/mm or higher, as measured using a tensile tester in accordance with JIS K6252:2007.

The cross-linked rubber according to the present invention has excellent fracture resistance and chipping resistance, and thus can be suitably used in applications such as tires, belts, and antivibration rubber, for example.

The cross-linked rubber obtained by cross-linking the rubber composition containing the carbon material as the inorganic material has also excellent wear resistance and steering stability, and can be suitably used in applications to tires for large vehicles. Further, the cross-linked rubber obtained by cross-linking the rubber composition containing the silica as the inorganic material has also excellent wet grip properties and reduced heat buildup, and can be suitably used in applications to tires for light vehicles.

### EXAMPLES

The present invention is hereinafter illustrated in greater detail with reference to Examples. However, the present invention should not be construed as limited to these examples. In the following examples, the term "part(s)" is on a weight basis unless otherwise indicated.

Tests and evaluations were performed according to the following methods.

### <Molecular weight of ring-opened copolymer>

The number average molecular weight (Mn), the weight average molecular weight (Mw), and the molecular weight distribution (Mw/Mn) of each ring-opened copolymer were determined as values measured against polystyrene standards by gel permeation chromatography (GPC) using tetrahydrofuran as a solvent. As a measuring device, "HLC-8320GPC" (available from Tosoh Corporation) was used. The measurement was performed using four "TSKgel SuperMultipore HZ-H" columns (available from Tosoh Corporation) connected in series as columns at a flow rate of 0.35 ml/min, a sample injection amount of 10 µml, and a column temperature of 40°C.

### <Ratio of structural units derived from norbornene compound and structural units derived from cyclooctadiene>

The ratio of monomer units in each ring-opened copolymer was determined by ¹H-NMR spectrometry. Specifically, ¹H-NMR measurement was performed using deuterochloroform as a solvent, and the ratio of the monomer units in each ring-opened copolymer was determined based on the integral ratio of the signal in 5.0 to 5.5 ppm derived from double bonds and the integral ratio of the signal in 2.3 to 3.0 ppm derived from a norbornene compound.

### <Cis/trans ratio of double bonds in main chain>

The cis/trans ratio of double bonds in the main chain of each ring-opened copolymer was determined by ¹³C-NMR spectrometry.

### <Degree of introduction of structural units derived from chain-transfer ends>

The degree of introduction of structural units derived from chain-transfer ends in each ring-opened copolymer was determined by ¹H-NMR spectrometry. Such a degree of introduction was specifically determined as follows: ¹H-NMR measurement was performed using deuterochloroform as a solvent, and the ratio of the monomer units and the structural units derived from chain-transfer ends in each ring-opened copolymer was determined based on the integral ratio of the signal in 5.0 to 5.5 ppm derived from the double bonds, the integral ratio of the signal in 2.3 to 3.0 ppm derived from the norbornene compound, and the integral ratio of the signal in -0.5 to 0.5 ppm derived from the chain-transfer ends having a silyl group, for example, and the determined ratio was then compared to the number average molecular weight (Mn) of each ring-opened copolymer calculated from the aforementioned GPC.

### <Glass transition temperature (Tg) of ring-opened copolymer>

The glass transition temperature (Tg) of each ring-opened copolymer was measured with a differential scanning calorimeter (DSC "X-DSC7000" (available from Hitachi High-Tech Science Corporation)) from - 150 to 40°C at a temperature increase rate of 10°C/min.

### <Tensile test>

The rubber composition was cross-linked by pressing to prepare a sheet-shaped cross-linked rubber, which was punched out in the direction parallel to the grain direction to prepare a dumbbell-shaped test piece in the shape of dumbbell No. 6 defined in JIS K6251:2010. The tensile strength and elongation of the dumbbell-shaped test piece were measured by a tensile test using a tensile tester (product name "TENSOMETER 10K", available from ALPHA TECHNOLOGIES) at 23°C at 500 mm/min in accordance with JIS K 6251:2010. A higher tensile strength indicates better fracture resistance.

### <Tear test>

The rubber composition was cross-linked by pressing to prepare a sheet-shaped cross-linked rubber, which was punched out in the direction perpendicular to the grain direction to prepare an angle test piece with no cut-out defined in JIS K6252:2007. The tear strength of the test piece was measured by a tensile test using a tensile tester (product name "TENSOMETER 10K", available from ALPHA TECHNOLOGIES) at 23°C at 500 mm/min in accordance with JIS K6252:2007. A higher tear strength indicates better chipping resistance.

### <Rebound resilience test>

The rubber composition was press-formed using a mold under pressure to obtain a cylinder-shaped cross-linked rubber for high resilience materials having a diameter of 29 mm and a thickness of 12.5 mm. The rebound resilience of the resulting cylinder-shaped cross-linked rubber for highly resilient materials was measured using a Lupke-type rebound resilience tester (available from Kobunshi Keiki Co., Ltd.) at 23°C at holding force of 29 to 39 N in accordance with JIS K6255:1996.

### <Wet grip properties>

The rubber composition was cross-linked by pressing at 160°C for 20 minutes to prepare a test piece, and the tanδ at 0°C of the resulting test piece was measured using ARES available from Rheometrics at a dynamic strain of 0.5% and a frequency of 10 Hz. An index was calculated from the measurement result based on the measured value of the sample in Comparative Example 6 described below as 100. A greater index indicates better wet grip properties. Note that the wet grip properties were evaluated in Examples 11 to 20 and Comparative Examples 6 to 10.

### <Low heat buildup>

The rubber composition was cross-linked by pressing at 160°C for 20 minutes to prepare a test piece, and the tanδ at 60°C of the resulting test piece was measured using ARES available from Rheometrics at a dynamic strain of 2.0% and a frequency of 10 Hz. An index was calculated from the measurement result based on the measured value of the sample in Comparative Example 6 described below as 100. A smaller index indicates reduced heat buildup. Note that the heat buildup was evaluated in Examples 11 to 20 and Comparative Examples 6 to 10.

### <DIN wear test>

The rubber composition was press-formed using a mold under pressure to obtain a cylinder-shaped cross-linked rubber for high resilience materials having a diameter of 16 mm and a thickness of 6 mm. A specific wear volume of the resulting cylinder-shaped cross-linked rubber for high resilience materials was measured using a DIN wear tester (product name "AB-6110", available from Ueshima Seisakusho Co., Ltd.) in accordance with JIS K6264-2:2005 under the conditions where the test method was the method A, the additional force was 10 N, the wear distance was 40 m, the temperature was 23°C, and the reference test piece D1 was used. A smaller specific wear volume indicates a better wear resistance. Note that the DIN wear test was performed in Examples 1 to 10 and Comparative Examples 1 to 5.

### <Rubber hardness>

The rubber composition was cross-linked by pressing at 160°C for 20 minutes to prepare a test piece, and the resulting test piece was measured at 20°C by a type A durometer in accordance with JISK6253. The result obtained was shown as an index where the value of a standard sample was 100. A larger index of the rubber hardness indicates a better steering stability. Note that the rubber hardness was evaluated in Examples 1 to 10 and Comparative Examples 1 to 5.

### [Polymerization Example 1]

### (Preparation of ring-opened copolymer (A))

Under a nitrogen atmosphere, 100 parts of 2-norbornene (NB) as a norbornene compound, 60 parts of 1,5-cyclooctadiene (COD), 394 parts of toluene, and 0.10 parts of 1-hexene were placed in a glass reaction vessel equipped with a stirrer. Subsequently, 0.005 parts of (1,3-dimesitylimidazolidine-2-ylidene) (tricyclohexylphosphine)benzylidene ruthenium(II) dichloride dissolved in 10 parts of toluene was added thereto to cause a polymerization reaction to proceed at room temperature for 4 hours. After the polymerization reaction, an excess of vinyl ethyl ether was added to terminate the polymerization reaction.

The polymer solution obtained above was poured into a large excess of methanol containing 2,6-di-t-butyl-p-cresol (BHT), and the precipitated polymer was collected, washed with methanol, and then vacuum dried at 50°C for 3 days to afford 159 parts of a ring-opened copolymer (A). The number average molecular weight (Mn) of the resulting ring-opened copolymer (A) was 126,000, the weight average molecular weight (Mw) was 273,000, the ratio of the 2-norbornene structural units/1,5-cyclooctadiene structural units was 63/37 (weight ratio), the cis/trans ratio was 46/54, and the glass transition temperature (Tg) was -25°C. Note that the weight ratio of 2-norbornene structural unit/1,5-cyclooctadiene structural unit represents a proportion of the content [% by weight] of each structural unit. Specifically, the content of the structural unit derived from 2-norbornene in the ring-opened copolymer (A) was 63% by weight, and the content of the structural unit derived from 1,5-cyclooctadiene was 37% by weight. Likewise hereafter, the weight ratio of the monomer unit in the ring-opened copolymer represents the proportion of the content [% by weight] of each monomer unit in the ring-opened copolymer.

### [Polymerization Example 2]

### (Preparation of ring-opened copolymer (B))

Under a nitrogen atmosphere, 110 parts of dicyclopentadiene (DCPD) as a norbornene compound, 90 parts of 1,5-cyclooctadiene (COD), 800 parts of toluene, and 0.11 parts of 1-hexene were placed in a glass reaction vessel equipped with a stirrer. Subsequently, 0.010 parts of (1,3-dimesitylimidazolidine-2-ylidene) (tricyclohexylphosphine)benzylidene ruthenium(II) dichloride dissolved in 10 parts of toluene was added thereto to cause the polymerization reaction to proceed at room temperature for 4 hours. After the polymerization reaction, an excess of vinyl ethyl ether was added to terminate the polymerization reaction.

The polymer solution obtained above was poured into a large excess of methanol containing 2,6-di-t-butyl-p-cresol (BHT), and the precipitated polymer was collected, washed with methanol, and was then vacuum dried at 50°C for 3 days to afford 195 parts of a ring-opened copolymer (B). The number average molecular weight (Mn) of the ring-opened copolymer (B) was 124,000, the weight average molecular weight (Mw) was 259,000, the ratio of the dicyclopentadiene structural units/1,5-cyclooctadiene structural units was 55/45 (weight ratio), the cis/trans ratio was 42/58, and the glass transition temperature (Tg) was -26°C.

### [Polymerization Example 3]

### (Preparation of ring-opened copolymer (C))

Under a nitrogen atmosphere, 41 parts of 2-norbornene (NB) as a norbornene compound, 39 parts of dicyclopentadiene (DCPD) as a norbornene compound, 75 parts of cyclooctadiene (COD), 620 parts of toluene, and 0.14 parts of 1-hexene were placed in a glass reaction vessel equipped with a stirrer. Subsequently, 0.005 parts of (1,3-dimesitylimidazolidine-2-ylidene) (tricyclohexylphosphine)benzylidene ruthenium(II) dichloride dissolved in 10 parts of toluene was added thereto to cause the polymerization reaction to proceed at room temperature for 4 hours. After the polymerization reaction, an excess of vinyl ethyl ether was added to terminate the polymerization reaction.

The polymer solution obtained above was poured into a large excess of methanol containing 2,6-di-t-butyl-p-cresol (BHT), and the precipitated polymer was collected, washed with methanol, and was then vacuum dried at 50°C for 3 days to afford 145 parts of a ring-opened copolymer (C). The number average molecular weight (Mn) of the ring-opened copolymer (C) was 133,000, the weight average molecular weight (Mw) was 268,000, the ratio of the 2-norbornene structural units/dicyclopentadiene structural units/cyclooctadiene structural units was 27/25/48 (weight ratio), the cis/trans ratio was 42/58, and the glass transition temperature (Tg) was -40°C.

### [Polymerization Example 4]

### (Preparation of ring-opened copolymer (D))

Under a nitrogen atmosphere, 100 parts of dicyclopentadiene (DCPD) as a norbornene compound, 180 parts of 1,5-cyclooctadiene (COD), 1120 parts of toluene, and 0.15 parts of 1-hexene were placed in a glass reaction vessel equipped with a stirrer. Subsequently, 0.011 parts of (1,3-dimesitylimidazolidine-2-ylidene) (tricyclohexylphosphine)benzylidene ruthenium(II) dichloride dissolved in 10 parts of toluene was added thereto to cause the polymerization reaction to proceed at room temperature for 4 hours. After the polymerization reaction, an excess of vinyl ethyl ether was added to terminate the polymerization reaction.

The polymer solution obtained above was poured into a large excess of methanol containing 2,6-di-t-butyl-p-cresol (BHT), and the precipitated polymer was collected, washed with methanol, and was then vacuum dried at 50°C for 3 days to afford 276 parts of a ring-opened polymer (D). The number average molecular weight (Mn) of the ring-opened polymer (D) was 121,000, the weight average molecular weight (Mw) was 255,000, the ratio of the dicyclopentadiene structural units/1,5-cyclooctadiene structural units was 36/64 (weight ratio), the cis/trans ratio was 37/63, and the glass transition temperature (Tg) was -43°C.

### [Polymerization Example 5]

### (Preparation of ring-opened copolymer (E))

Under a nitrogen atmosphere, 70 parts of tetracyclo[6.2.1.1^{3,6}.0^{2,7}]dodec-4-ene (tetracyclododecene; TCD) as a norbornene compound, 180 parts of 1,5-cyclooctadiene (COD), 1000 parts of toluene, and 0.14 parts of 1-hexene were placed in a glass reaction vessel equipped with a stirrer. Subsequently, 0.015 parts of (1,3-dimesitylimidazolidine-2-ylidene) (tricyclohexylphosphine)benzylidene ruthenium(II) dichloride dissolved in 10 parts of toluene was added thereto to cause the polymerization reaction to proceed at room temperature for 4 hours. After the polymerization reaction, an excess of vinyl ethyl ether was added to terminate the polymerization reaction.

The polymer solution obtained above was poured into a large excess of methanol containing 2,6-di-t-butyl-p-cresol (BHT), and the precipitated polymer was collected, washed with methanol, and was then vacuum dried at 50°C for 3 days to afford 242 parts of a ring-opened copolymer (E). The number average molecular weight (Mn) of the ring-opened copolymer (E) was 138,000, the weight average molecular weight (Mw) was 262,000, the ratio of the tetracyclododecene structural units/1,5-cyclooctadiene structural units was 28/72 (weight ratio), the cis/trans ratio was 34/66, and the glass transition temperature (Tg) was -23°C.

### [Polymerization Example 6]

### (Preparation of ring-opened copolymer (F))

Under a nitrogen atmosphere, 100 parts of dicyclopentadiene (DCPD) as a norbornene compound, 245 parts of 1,5-cyclooctadiene (COD), 1400 parts of toluene, and 0.20 parts of 1-hexene were placed in a glass reaction vessel equipped with a stirrer. Subsequently, 0.015 parts of (1,3-dimesitylimidazolidine-2-ylidene) (tricyclohexylphosphine)benzylidene ruthenium(II) dichloride dissolved in 10 parts of toluene was added thereto to cause the polymerization reaction to proceed at room temperature for 4 hours. After the polymerization reaction, an excess of vinyl ethyl ether was added to terminate the polymerization reaction.

The polymer solution obtained above was poured into a large excess of methanol containing 2,6-di-t-butyl-p-cresol (BHT), and the precipitated polymer was collected, washed with methanol, and was then vacuum dried at 50°C for 3 days to afford 340 parts of a ring-opened copolymer (F). The number average molecular weight (Mn) of the ring-opened copolymer (F) was 122,000, the weight average molecular weight (Mw) was 246,000, the ratio of the dicyclopentadiene structural units/1,5-cyclooctadiene structural units was 29/71 (weight ratio), the cis/trans ratio was 35/65, and the glass transition temperature (Tg) was -50°C.

### [Polymerization Example 7]

### (Preparation of ring-opened copolymer (G))

Under a nitrogen atmosphere, 100 parts of 2-norbornene (NB) as a norbornene compound, 60 parts of 1,5-cyclooctadiene (COD), 394 parts of toluene, and 0.38 parts of 1-hexene were placed in a glass reaction vessel equipped with a stirrer. Subsequently, 0.005 parts of (1,3-dimesitylimidazolidine-2-ylidene) (tricyclohexylphosphine)benzylidene ruthenium(II) dichloride dissolved in 10 parts of toluene was added thereto to cause the polymerization reaction to proceed at room temperature for 4 hours. After the polymerization reaction, an excess of vinyl ethyl ether was added to terminate the polymerization reaction.

The polymer solution obtained above was poured into a large excess of methanol containing 2,6-di-t-butyl-p-cresol (BHT), and the precipitated polymer was collected, washed with methanol, and was then vacuum dried at 50°C for 3 days to afford 158 parts of a ring-opened copolymer (G). The number average molecular weight (Mn) of the ring-opened copolymer (G) was 32,000, the weight average molecular weight (Mw) was 67,000, the ratio of the 2-norbornene structural units/1,5-cyclooctadiene structural units was 63/37 (weight ratio), the cis/trans ratio was 46/54, and the glass transition temperature (Tg) was -27°C.

### [Polymerization Example 8]

### (Preparation of ring-opened copolymer (H))

Under a nitrogen atmosphere, 110 parts of dicyclopentadiene (DCPD) as a norbornene compound, 90 parts of 1,5-cyclooctadiene (COD), 800 parts of toluene, and 0.43 parts of vinyl tris(trimethylsiloxy)silane were placed in a glass reaction vessel equipped with a stirrer. Subsequently, 1.000 parts of (1,3-dimesitylimidazolidine-2-ylidene) (tricyclohexylphosphine)benzylidene ruthenium(II) dichloride dissolved in 10 parts of toluene was added thereto to cause the polymerization reaction to proceed at room temperature for 4 hours. After the polymerization reaction, an excess of vinyl ethyl ether was added to terminate the polymerization reaction.

The polymer solution obtained above was poured into a large excess of methanol containing 2,6-di-t-butyl-p-cresol (BHT), and the precipitated polymer was collected, washed with methanol, and was then vacuum dried at 50°C for 3 days to afford 192 parts of a ring-opened copolymer (H). The number average molecular weight (Mn) of the ring-opened copolymer (H) was 133,000, the weight average molecular weight (Mw) was 264,000, the ratio of the dicyclopentadiene structural units/1,5-cyclooctadiene structural units was 55/45 (weight ratio), the cis/trans ratio was 42/58, and the glass transition temperature (Tg) was -25°C. The degree of introduction of the oxysilyl group to chain-transfer ends identified by ¹H-NMR was 94%. That is, a percentage of the number of ring-opened copolymer chain end(s) to which the modifying group was introduced with respect to the total number of ring-opened copolymer chain ends was 47%.

### [Polymerization Example 9]

### (Preparation of ring-opened copolymer (I))

Under a nitrogen atmosphere, 110 parts of dicyclopentadiene (DCPD) as a norbornene compound, 90 parts of 1,5-cyclooctadiene (COD), 800 parts of toluene, and 0.11 parts of 1-hexene were placed in a glass reaction vessel equipped with a stirrer. Subsequently, 0.030 parts of dichloro-(3-phenyl-1H-inden-1-ylidene)bis(tricyclohexylphosphine)ruthenium(II) dissolved in 10 parts of toluene was added thereto to cause the polymerization reaction to proceed at room temperature for 4 hours. After the polymerization reaction, an excess of vinyl ethyl ether was added to terminate the polymerization reaction.

The polymer solution obtained above was poured into a large excess of methanol containing 2,6-di-t-butyl-p-cresol (BHT), and the precipitated polymer was collected, washed with methanol, and was then vacuum dried at 50°C for 3 days to afford 194 parts of a ring-opened copolymer (I). The number average molecular weight (Mn) of the ring-opened copolymer (I) was 128,000, the weight average molecular weight (Mw) was 266,000, the ratio of the dicyclopentadiene structural units/1,5-cyclooctadiene structural units was 54/46 (weight ratio), the cis/trans ratio was 20/80, and the glass transition temperature (Tg) was -26°C.

### [Polymerization Example 10]

### (Preparation of diisobutylaluminium hexoxide/toluene solution)

Under a nitrogen atmosphere, 88 parts of toluene and 7.8 parts of a triisobutylaluminium/n-hexane solution of 25.4% by weight (available from Tosoh Finechem Corporation) were placed in a glass vessel having a stirring bar therein. The solution was cooled to -45°C, and 1.02 parts (mol equivalent with respect to triisobutylaluminium) of n-hexanol was slowly added dropwise thereto while the solution was being vigorously stirred. Subsequently, the solution was left to stand until at room temperature while being stirred, and a diisobutylaluminium hexoxide/toluene solution (2.5% by weight) was prepared.

### (Preparation of ring-opened copolymer (J))

Next, under a nitrogen atmosphere, 17.4 parts of a tungsten hexachloride/toluene solution of 1.0% by weight and 8.6 parts of a diisobutylaluminium hexoxide/toluene solution of 2.5% by weight were placed in a glass reaction vessel equipped with a stirrer, and the solution was stirred for 10 minutes to obtain a catalyst solution. Then, 110 parts of dicyclopentadiene (DCPD) as a norbornene compound, 90 parts of 1,5-cyclooctadiene (COD), 800 parts of toluene, and 0.35 parts of 1-hexene were added thereto to cause the polymerization reaction to proceed at room temperature for 6 hours. After the polymerization reaction, an excess of methanol was added to terminate the polymerization reaction.

The polymer solution obtained above was poured into a large excess of methanol containing 2,6-di-t-butyl-p-cresol (BHT), and the precipitated polymer was collected, washed with methanol, and was then vacuum dried at 50°C for 3 days to afford 193 parts of a ring-opened copolymer (J). The number average molecular weight (Mn) of the ring-opened copolymer (J) was 119,000, the weight average molecular weight (Mw) was 245,000, the ratio of the dicyclopentadiene structural units/1,5-cyclooctadiene structural units was 54/46 (weight ratio), the cis/trans ratio was 73/27, and the glass transition temperature (Tg) was -27°C.

### [Polymerization Example 11]

### (Preparation of ring-opened copolymer (a))

Under a nitrogen atmosphere, 100 parts of 2-norbornene (NB) as a norbornene compound, 100 parts of cyclopentene (CPE), 394 parts of toluene, and 0.12 parts of 1-hexene were placed in a glass reaction vessel equipped with a stirrer. Subsequently, 0.006 parts of dichloro-(3-phenyl-1H-inden-1-ylidene)bis(tricyclohexylphosphine)ruthenium dissolved in 10 parts of toluene was added thereto to cause the polymerization reaction to proceed at room temperature for 4 hours. After the polymerization reaction, an excess of vinyl ethyl ether was added to terminate the polymerization reaction.

The polymer solution obtained above was poured into a large excess of methanol containing 2,6-di-t-butyl-p-cresol (BHT), and the precipitated polymer was collected, washed with methanol, and was then vacuum dried at 50°C for 3 days to afford 160 parts of a ring-opened copolymer (a). The number average molecular weight (Mn) of the ring-opened copolymer (a) was 122,000, the weight average molecular weight (Mw) was 234,000, the ratio of the 2-norbornene structural units/cyclopentene structural units was 62/38 (weight ratio), the cis/trans ratio was 17/83, and the glass transition temperature (Tg) was -24°C.

### [Polymerization Example 12]

### (Preparation of ring-opened copolymer (b))

Under a nitrogen atmosphere, 45 parts of dicyclopentadiene (DCPD) as a norbornene compound, 55 parts of cyclopentene (CPE), 233 parts of toluene, and 0.08 parts of 1-hexene were placed in a glass reaction vessel equipped with a stirrer. Subsequently, 0.011 parts of dichloro-(3-phenyl-1H-inden-1-ylidene)bis(tricyclohexylphosphine)ruthenium(II) dissolved in 6 parts of toluene was added thereto to cause the polymerization reaction to proceed at room temperature for 3 hours. After the polymerization reaction, an excess of vinyl ethyl ether was added to terminate the polymerization reaction.

The polymer solution was poured into a large excess of methanol containing 2,6-di-t-butyl-p-cresol (BHT), and the precipitated polymer was collected, washed with methanol, and was then vacuum dried at 50°C for 3 days to afford 62 parts of a ring-opened copolymer (b). The number average molecular weight (Mn) of the ring-opened copolymer (b) was 119,000, the weight average molecular weight (Mw) was 238,000, the ratio (Mw/Mn) between the weight average molecular weight (Mw) and the number average molecular weight (Mn) was 2.00, the ratio of the dicyclopentadiene (DCPD) structural units/cyclopentene structural units was 55/45 (weight ratio), the cis/trans ratio was 17/83, and the glass transition temperature (Tg) was -25°C.

### [Polymerization Example 13]

### (Preparation of ring-opened copolymer (c))

Under a nitrogen atmosphere, 41 parts of 2-norbornene (NB) as a norbornene compound, 39 parts of dicyclopentadiene (DCPD) as a norbornene compound, 100 parts of cyclopentene (CPE), 394 parts of toluene, and 0.14 parts of 1-hexene were placed in a glass reaction vessel equipped with a stirrer. Subsequently, 0.017 parts of dichloro-(3-phenyl-1H-inden-1-ylidene)bis(tricyclohexylphosphine)ruthenium dissolved in 10 parts of toluene was added thereto to cause the polymerization reaction to proceed at room temperature for 4 hours. After the polymerization reaction, an excess of vinyl ethyl ether was added to terminate the polymerization reaction.

The polymer solution obtained above was poured into a large excess of methanol containing 2,6-di-t-butyl-p-cresol (BHT), and the precipitated polymer was collected, washed with methanol, and was then vacuum dried at 50°C for 3 days to afford 145 parts of a ring-opened copolymer (c). The number average molecular weight (Mn) of the ring-opened copolymer (C) was 126,000, the weight average molecular weight (Mw) was 254,000, the ratio of the 2-norbornene structural units/dicyclopentadiene structural units/cyclopentene structural units was 27/25/48 (weight ratio), the cis/trans ratio was 18/82, and the glass transition temperature (Tg) was -40°C.

### [Polymerization Example 14]

### (Preparation of ring-opened copolymer (d))

Under a nitrogen atmosphere, 72 parts of dicyclopentadiene (DCPD) as a norbornene compound, 188 parts of cyclopentene (CPE), 1160 parts of toluene, and 0.17 parts of 1-hexene were placed in a glass reaction vessel equipped with a stirrer. Subsequently, 0.028 parts of dichloro-(3-phenyl-1H-inden-1-ylidene)bis(tricyclohexylphosphine)ruthenium dissolved in 10 parts of toluene was added thereto to cause the polymerization reaction to proceed at room temperature for 4 hours. After the polymerization reaction, an excess of vinyl ethyl ether was added to terminate the polymerization reaction.

The polymer solution obtained above was poured into a large excess of methanol containing 2,6-di-t-butyl-p-cresol (BHT), and the precipitated polymer was collected, washed with methanol, and was then vacuum dried at 50°C for 3 days to afford 217 parts of a ring-opened copolymer (d). The number average molecular weight (Mn) of the ring-opened copolymer (d) was 120,000, the weight average molecular weight (Mw) was 248,000, the ratio of the dicyclopentadiene structural units/cyclopentene structural units was 36/64 (weight ratio), the cis/trans ratio was 17/83, and the glass transition temperature (Tg) was -45°C.

### [Polymerization Example 15]

### (Preparation of ring-opened copolymer (e))

Under a nitrogen atmosphere, 100 parts of tetracyclo[6.2.1.1^{3,6}.0^{2,7}]dodec-4-ene (tetracyclododecene; TCD) as a norbornene compound, 300 parts of cyclopentene (CPE), 380 parts of toluene, and 8.6 parts of 1-hexene were placed in a glass reaction vessel equipped with a stirrer. Subsequently, 0.028 parts of dichloro-(3-phenyl-1H-inden-1-ylidene)bis(tricyclohexylphosphine)ruthenium dissolved in 10 parts of toluene was added thereto to cause the polymerization reaction to proceed at room temperature for 4 hours. After the polymerization reaction, an excess of vinyl ethyl ether was added to terminate the polymerization reaction.

The polymer solution obtained above was poured into a large excess of methanol containing 2,6-di-t-butyl-p-cresol (BHT), and the precipitated polymer was collected, washed with methanol, and was then vacuum dried at 50°C for 3 days to afford 290 parts of a ring-opened copolymer (e). The number average molecular weight (Mn) of the ring-opened copolymer (e) was 131,000, the weight average molecular weight (Mw) was 253,000, the ratio of the tetracyclododecene structural units/cyclopentene structural units was 28/72 (weight ratio), the cis/trans ratio was 17/83, and the glass transition temperature (Tg) was -22°C.

### [Example 1]

### (Preparation of rubber composition)

100 Parts of the ring-opened copolymer (A) obtained in Polymerization Example 1 was masticated by a Banbury mixer having a volume of 250 ml, and to the masticated product, 50 parts of carbon black (product name "Seast 9H", manufactured by Tokai Carbon Co., Ltd.), 3 parts of zinc oxide (zinc flower No. 1), 2.0 parts of stearic acid (product name "SA-300", available from ADEKA Corporation), and 2.0 parts of N-phenyl-N'-(1,3-dimethylbutyl)-p-phenylenediamine (product name "NOCRAC 6C", available from Ouchi Shinko Chemical Industrial Co., Ltd., an antioxidant) were added. The resulting mixture was kneaded at a starting temperature of 80°C for 4 minutes, and the resulting rubber composition was discharged from the Banbury mixer. When the kneading was completed, the temperature of the rubber composition was 160°C. Subsequently, the rubber composition obtained was kneaded with 1.75 parts of sulfur and 1 part of N-cyclohexylbenzothiazole-2-sulfen (product name "NOCCELER CZ-G (CZ)", available from Ouchi Shinko Chemical Industrial Co., Ltd., a cross-linking accelerator) using open rolls at 50°C, and then a sheet-shaped rubber composition was extracted. A tensile strength, elongation, tear strength, rebound resilience, specific wear volume, and rubber hardness of the rubber composition obtained were evaluated. The results are shown in Table 1.

### [Examples 2 to 10]

A rubber composition was obtained in the same manner as in Example 1, and likewise evaluated, except that 100 parts of each ring-opened copolymer (B) to (J) shown in Table 1 was used instead of the ring-opened copolymer (A).

### [Comparative Examples 1 to 5]

A rubber composition was obtained in the same manner as in Example 1, and likewise evaluated, except that 100 parts of each ring-opened copolymer (a) to (e) shown in Table 1 was used instead of the ring-opened copolymer (A). The results are shown in Table 1.

### [Table 1]

**Table 1**

| | | | Example | | | | | | | | | | Comparative Example | | | | |
|---|---|---|---|---|---|---|---|---|---|---|---|---|---|---|---|---|---|
| | | | 1 | 2 | 3 | 4 | 5 | 6 | 7 | 8 | 9 | 10 | 1 | 2 | 3 | 4 | 5 |
| | R ing-opened copolymer | | A | B | C | D | E | F | G | H | I | J | a | b | c | d | e |
| | Unit derived from cyclooctadiene | (parts) | 37 | 45 | 48 | 64 | 72 | 71 | 37 | 45 | 46 | 46 | - | - | - | - | - |
| | Unit derived from cyclopentene | (parts) | - | - | - | - | - | - | - | - | - | - | 38 | 45 | 48 | 64 | 72 |
| | Unit derived from norbornene | (parts) | 63 | - | 27 | - | - | - | 63 | - | - | - | 62 | - | 27 | - | - |
| | Unit derived from dicyclopentadiene | (parts) | - | 55 | 25 | 36 | - | 29 | | 55 | 54 | 54 | - | 55 | 25 | 36 | - |
| | Unit derived from tetracyclododecene | (parts) | - | - | - | - | 28 | - | | - | - | - | - | - | - | - | 28 |
| | Physical properties of ring-opened copolymer | | | | | | | | | | | | | | | | |
| | Weight average molecular weight | (-) | 273000 | 259000 | 268000 | 255000 | 262000 | 246000 | 67000 | 264000 | 266000 | 245000 | 234000 | 238000 | 254000 | 248000 | 253000 |
| | Cis/trans ratio | (-) | 46/54 | 42/58 | 42/58 | 37/63 | 34/66 | 35/65 | 46/54 | 42/58 | 20/80 | 73/27 | 17/83 | 17/83 | 18/82 | 17/83 | 17/83 |
| | Glass transition temperature (Tg) | (°C) | -25 | -26 | -40 | -43 | -23 | -50 | -27 | -25 | -26 | -27 | -24 | -25 | -40 | -45 | -22 |
| | Filler | | | | | | | | | | | | | | | | |
| | Carbon black | (parts) | 50 | 50 | 50 | 50 | 50 | 50 | 50 | 50 | 50 | 50 | 50 | 50 | 50 | 50 | 50 |
| | Physical properties of cross-linked rubber | | | | | | | | | | | | | | | | |
| | Tensile strength | (MPa) | 49.1 | 45.3 | 47.6 | 41.2 | 38.8 | 42.5 | 37.4 | 46.6 | 45 | 38.5 | 37.1 | 28 | 30.4 | 24.1 | 21.1 |
| | Elongation | (%) | 470 | 450 | 490 | 450 | 440 | 470 | 450 | 440 | 440 | 520 | 430 | 270 | 370 | 390 | 250 |
| | Tear strength (chipping resistance) | (N/mm) | 89.1 | 84.6 | 82.9 | 81.9 | 81.7 | 82.2 | 80.2 | 89.8 | 84.4 | 80.9 | 80.5 | 76.2 | 78.7 | 75.8 | 63.9 |
| | Rebound resilience | (%) | 55 | 51 | 56 | 55 | 52 | 56 | 44 | 52 | 48 | 54 | 48 | 46 | 49 | 50 | 44 |
| | Specific wear volume | (mm³) | 32 | 36 | 30 | 31 | 38 | 30 | 60 | 36 | 37 | 38 | 46 | 68 | 39 | 40 | 93 |
| | Rubber hardness (steering stability) | (-) | 110 | 115 | 109 | 113 | 114 | 111 | 95 | 115 | 116 | 99 | 104 | 103 | 103 | 102 | 101 |

As shown in Table 1, the cross-linked rubbers obtained by cross-linking the rubber composition of Examples 1 to 10 each containing an inorganic material and a ring-opened copolymer containing a structural unit derived from cyclooctadiene and a structural unit derived from a norbornene compound exhibited more excellent tensile strength, elongation, tear strength, and rebound resilience than those of the cross-linked rubbers obtained using cyclopentene (Comparative Examples 1 to 5) instead of cyclooctadiene. The cross-linked rubbers obtained by cross-linking the rubber compositions of Examples 1 to 10 in which carbon black was used as an inorganic material also had excellent wear resistance and rubber hardness.

### [Example 11]

### (Preparation of rubber composition)

To 100 parts of ring-opened copolymer (A) obtained in Polymerization Example 1, 50 parts of silica (product name "Zeosil 1165MP", available from Rhodia Company, nitrogen adsorption specific surface area (BET method): 163 m²/g) and 10 parts of a process oil (product name "Aromax T-DAE", available from NIPPON OIL CORPORATION), 6.0 parts of a silane coupling agent (bis(3-(triethoxysilyl)propyl)tetrasulfide, product name "Si69", available from Degussa Company) were added, and the mixture was kneaded at a starting temperature of 110°C for 1.5 minutes. To the kneaded product, 25 parts of silica (product name "Zeosil 1165MP", available from Rhodia Company), 3 parts of zinc oxide (zinc flower No. 1), 2.0 parts of stearic acid (product name "SA-300", available from ADEKA Corporation), and 2.0 parts of an antioxidant (N-phenyl-N'-(1,3-dimethylbutyl)-p-phenylenediamine, product name "NOCRAC 6C", available from Ouchi Shinko Chemical Industrial Co., Ltd.) were added. The resulting mixture was kneaded for 2.5 minutes, and the resulting rubber composition was discharged from the Banbury mixer. When the kneading was completed, the temperature of the rubber composition was 150°C. After cooled to room temperature, the rubber composition was kneaded again in the Banbury mixer for 3 minutes, and was then discharged from the Banbury mixer. Subsequently, the rubber composition obtained was kneaded with 1.5 parts of sulfur and a cross-linking accelerator (a mixture of 1.8 parts of N-t-butyl-2-benzothiazolesulfenamide (product name "NOCCELER NS", available from Ouchi Shinko Chemical Industrial Co., Ltd.) and 1.5 parts of diphenylguanidine (product name "NOCCELER D", available from Ouchi Shinko Chemical Industrial Co., Ltd.) using open rolls at 50°C, and then a sheet-shaped rubber composition was extracted. A tensile strength, elongation, tear strength, rebound resilience, wet grip properties, and low heat buildup of the rubber composition obtained were evaluated. The results are shown in Table 1.

### [Examples 12 to 20]

Rubber compositions were obtained in the same manner as in Example 11, and likewise evaluated, except that the ring-opened copolymers (B) to (J) shown in Table 1 were used in an amount of 100 parts, respectively, instead of the ring-opened copolymer (A). The results are shown in Table 2.

### [Comparative Examples 6 to 10]

Rubber compositions were obtained in the same manner as in Example 11, and likewise evaluated, except that the ring-opened copolymers (b) to (e) shown in Table 1 were used in an amount of 100 parts, respectively, instead of the ring-opened copolymer (A). The results are shown in Table 2.

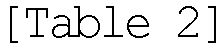

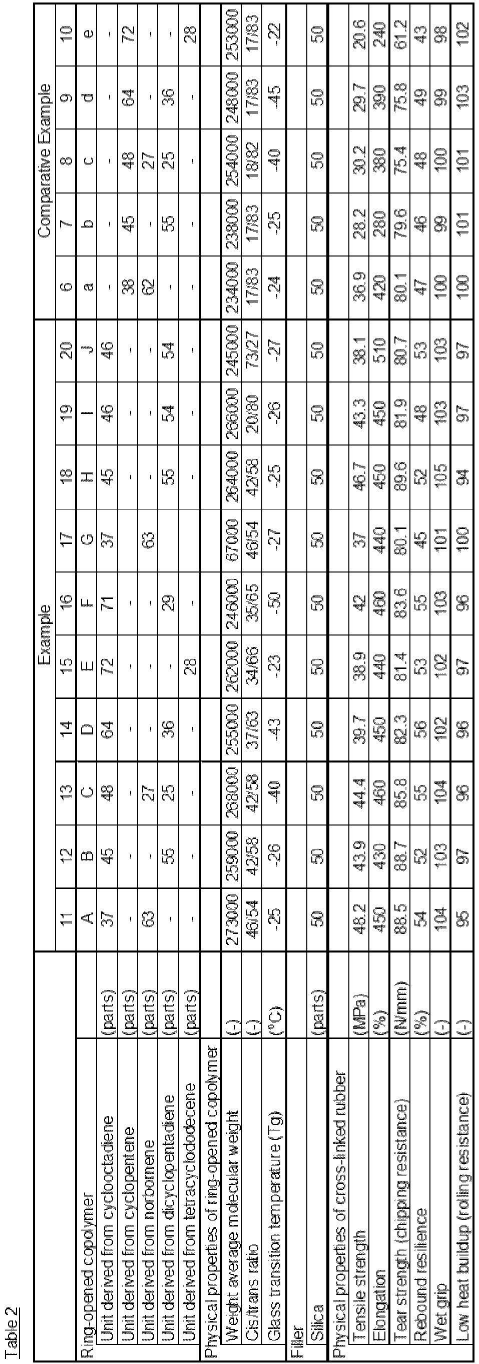

As shown in Table 2, the cross-linked rubbers obtained by cross-linking the rubber compositions of Examples 11 to 20 each containing an inorganic material and a ring-opened copolymer containing a structural unit derived from cyclooctadiene and a structural unit derived from a norbornene compound exhibited more excellent tensile strength, elongation, tear strength, and rebound resilience than those of the cross-linked rubbers obtained using cyclopentene (Comparative Examples 6 to 10) instead of cyclooctadiene. The cross-linked rubbers obtained by cross-linking the rubber compositions of Examples 11 to 20 in which silica was used as an inorganic material had excellent wet grip properties and reduced heat buildup.

## Claims

1. A rubber composition comprising an inorganic material and a ring-opened copolymer containing a structural unit derived from cyclooctadiene and a structural unit derived from a norbornene compound.

2. The rubber composition according to claim 1, wherein the inorganic material is a carbon material or silica.

3. The rubber composition according to claim 1 or 2, wherein the norbornene compound is a norbornene compound represented by general formula (1): 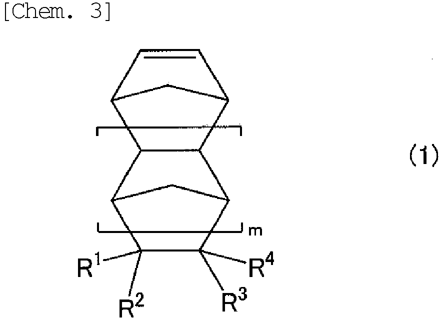 wherein R¹ to R⁴ are each a hydrogen atom, a hydrocarbon group having 1 to 20 carbon atoms, or a substituent containing a halogen atom, a silicon atom, an oxygen atom, or a nitrogen atom, and R² and R³ may be bonded to each other to form a ring structure, and "m" is 0 or 1.

4. The rubber composition according to claim 3, wherein R¹ to R⁴ are each a hydrogen atom, a chain hydrocarbon group having 1 to 20 carbon atoms, or a substituent containing a halogen atom, a silicon atom, an oxygen atom, or a nitrogen atom.

5. The rubber composition according to any one of claims 1 to 4, wherein the ring-opened polymer has a weight average molecular weight of 50,000 to 1,000,000.

6. The rubber composition according to any one of claims 1 to 5, wherein the ring-opened polymer has a glass transition temperature of -80 to 10°C.

7. The rubber composition according to any one of claims 1 to 6, further comprising a rubber other than the ring-opened copolymer.

8. A cross-linked rubber formed by cross-linking the rubber composition according to any one of claims 1 to 7.
